# EUROPEAN PATENT APPLICATION

(11) **EP 4 485 955 A1**
(43) Date of publication of application: **01.01.2025**
(21) Application number: 23182406.1
(22) Date of filing: 29.06.2023
(51) Int. Cl.: H04N 23/56, G06V 10/141, G06V 20/56, H04N 23/60, H04N 23/74, H05B 47/10

(54) **CONTROL ASSEMBLY FOR A VEHICLE, IMAGE DETECTOR CONTROL UNIT, LIGHT SOURCE CONTROL UNIT, METHOD FOR OPERATING AN IMAGE DETECTOR ASSEMBLY, METHOD FOR OPERATING A LIGHT SOURCE ASSEMBLY, AND USES**

(71) Applicant: Volvo Car Corporation, 405 31 Göteborg (SE)
(72) Inventor: ORESTEN, Jonas, 40531 Göteborg (SE)
(74) Representative: Maiwald GmbH

(57) **Abstract**

The disclosure relates to a control assembly (28) for a vehicle (10). The control assembly (28) comprises an image detector control unit (26) and a light source control unit (18). Moreover, the control assembly (28) comprises a data providing means configured to provide light source operation data indicative of at least one deactivation interval in which the light source (16) is deactivated and/or at least one activation interval during which the light source (16) is activated. Additionally or alternatively, the data providing means is configured to provide image detector operation data indicative of at least one point in time in which an image is captured to the light source control unit (18). Additionally, an image detector control unit (26) and a light source control unit (18) for such a control assembly (28) are described. Furthermore, a method for operating an image detector assembly (20) and a method for operating a light source assembly (14) are presented. Additionally, a use of light source operation data and a use of image detector operation data are shown.

## Description

### TECHNICAL FIELD

The present disclosure relates to a control assembly for a vehicle. The control assembly comprises an image detector control unit configured to control an image detector and a light source control unit configured to control a light source.

Moreover, the present disclosure is directed to an image detector control unit for such a control assembly.

Furthermore, the present disclosure is directed to a light source control unit for such a control assembly.

Additionally, the present disclosure relates to a method for operating an image detector assembly locatable in proximity to a light source assembly and to a method for operating a light source assembly locatable in proximity to an image detector assembly.

Furthermore, the present disclosure is directed to a use of light source operation data and to a use of image detector operation data.

### BACKGROUND ART

Modem vehicles usually comprise one or more image detectors configured to capture moving or standing images of an environment of the vehicle. Moreover, vehicles usually comprise a plurality of light sources, e.g. headlights, direction indicator lights, position lights, rear lights, brake lights, fog lights and/or license plate illumination lights.

When using image detectors, it is a general aim to operate the image detectors in a way that allows to capture images of consistently high quality. Especially, the captured images shall be independent from an undesired influence of the operational state of the light sources. This may be achieved by keeping a comparatively large distance between the image detectors and the light sources of a vehicle. However, especially in vehicles comprising a plurality of image detectors, it may not be possible to space image detectors and light sources sufficiently apart.

### SUMMARY

It is therefore an objective of the present disclosure to provide a solution according to which one or more light sources of a vehicle and one or more image detectors of the same vehicle do not negatively influence one another.

The problem is at least partially solved or alleviated by the subject matter of the independent claims of the present disclosure, wherein further examples are incorporated in the dependent claims.

According to a first aspect, there is provided a control assembly for a vehicle. The control assembly comprises:
- an image detector control unit configured to control an image detector such that the image detector captures an image in at least one point in time,
- a light source control unit configured to control a light source such that the light source may be operated in accordance with a schedule, the schedule comprising at least one activation interval during which the light source is activated and at least one deactivation interval in which the light source is deactivated, and
- a data providing means configured to provide light source operation data indicative of the at least one deactivation interval and/or the at least one activation interval to the image detector control unit and/or configured to provide image detector operation data indicative of the at least one point in time to the light source control unit.

Schedules comprising at least one activation interval during which the light source is activated and at least one deactivation interval during which the light source is deactivated are frequently used when operating or controlling light sources. A prominent example is the control of a light-emitting diode (LED) using a pulse width modulation (PWM) signal. This means that a voltage of the LED is repeatedly switched between 0 and some higher, positive voltage. Thus, the LED will flicker, but as long as the flickering frequency is kept above a threshold frequency that cannot be resolved any more by a human eye, the human eye will only perceive a static light. When compared to operating the LED using a continuous voltage, using a PWM signal allows to keep a static light with less energy consumption, since the LEDs are actually only consuming electrical energy part of the time. Operating a LED using a PWM signal also allows for dimming and/or ramping up or down the light. As far as the image detector control unit and the control of an image detector is concerned, the image detector may be controlled such that it only captures an image in accordance with a defined capturing frequency, i.e. in equidistant points in time. This means that the image detector captures images in a periodic, non-continuous manner. Using the data providing means, the operation of the image detector control unit and the light source control unit may be time coordinated or time synchronized. This may be done according to a first alternative in which light source operation data indicative of the at least one deactivation interval and/or the at least one activation interval is rendered available for the image detector control unit. Consequently, the capturing of the images, more generally speaking the control of the image detector, may be coordinated with the operation of the light source. Based thereon, the image detector may be controlled such that it only captures images during a deactivation interval in which the light source is deactivated. Thus, a negative influence of the light source on the image detector and the captured images is excluded. Moreover, a performance of the image detector in dark environment is enhanced. This leads to images of high quality. Alternatively, the image detector may be controlled such that it only captures images during an activation interval in which the light source is activated. In other words, the image detector is controlled such that it only captures images of an area or space that is illuminated by the light source. This has the effect that the image detector may be operated such that it captures images of consistently high quality, based on the light source operation data. According to a second alternative, image detector operation data indicative of the at least one point in time at which an image is captured is rendered available for the light source control unit. Thus, the light source control unit may be operated in a time coordinated or time synchronized manner with respect to the image detector control unit. This means that the light source control unit can specifically control the light source such that it is in an activation interval or a deactivation interval when the image detector control unit controls the image detector to capture an image. Thus, the image detector control unit and the light source control unit do not negatively influence one another.

It is noted that the image detector control unit is configured to control the image detector in coordination or in synchronization with the operation of the light source based on the light source operation data. Thus, the image detector control unit is configured to cause the image detector to capture an image during the at least one deactivation interval or during the at least one activation interval.

It is additionally noted that the light source control unit is configured to control the light source in coordination or in synchronization with the operation of the image detector based on the image detector operation data. Thus, the light source control unit is configured to cause the light source to emit light at the at least one point in time at which the image detector is capturing an image or outside the at least one point in time at which the image detector is capturing an image.

In simplified words, the basic idea underlying the present disclosure is to time coordinate the operation of an image detector and a light source such that the image detector specifically captures images while the light source located in proximity to the image detector is in a deactivation interval in which the light source is deactivated or in an activation interval in which the light source is activated.

According to an example, the light source operation data comprises a starting time of at least one deactivation interval and/or at least one activation interval and a corresponding duration time of the at least one deactivation interval and/or the at least one activation interval. In another example, the light source operation data comprises a starting time of at least one deactivation interval and/or at least one activation interval, a starting state information, i.e. an information indicating whether at the starting time the light source is in a deactivation interval or in an activation interval, and a switching information, i.e. an information describing when the light source is switched from a deactivation interval into an activation interval and vice versa.

According to an example, the image detector operation data comprises a time information indicative of a time at which an image is captured. Optionally, a corresponding duration time is provided, the duration time being indicative of a time span during which the image is captured.

In an example, the data providing means comprises a memory unit. The light source operation data is stored on the memory unit. Additionally or alternatively, the image detector operation data is stored on the memory unit. In a case in which the light source operation data is stored on the memory unit, the memory unit may form part of the image detector control unit or may be communicatively connected thereto. In a case in which the image detector operation data is stored on the memory unit, the memory unit may form part of the light source control unit or may be communicatively connected thereto. Thus, the light source operation data and/or the image detector operation data is provided on the memory unit. This is a simple and reliable way to render available light source operation data and/or the image detector operation data.

In an example, the data providing means comprises a communication interface configured to provide the light source operation data to the image detector control unit and/or configured to provide the image detector operation data to the light source control unit. Thus, the light source operation data is provided to the image detector control unit via the communication interface. Alternatively or additionally, the image detector operation data is provided to the light source control unit via the communication interface. A combination is also possible. This is another simple and reliable way to render available light source operation data for the image detector control unit and/or image detector operation data for the light source control unit. A further advantage of the communication interface is that also changes in the light source operation data and/or the image detector operation data may be rendered available for the image detector control unit and/or the light source control unit respectively. In other words, the operation of the image detector control unit may be flexibly adapted to the light source operation and/or the operation of the light source control unit may be flexibly adapted to the image detector control unit.

According to an example, the control assembly further comprises a clock unit, wherein the clock unit is communicatively connected to the image detector control unit and to the light source control unit. In other words, the image detector control unit and the light source control unit share a clock unit. Thus, the image detector control unit and the light source control unit may be operated in a time synchronized manner. Consequently, the operation of the image detector control unit may be precisely adjusted to the operation of the light source control unit and/or vice versa.

In an example, the shared clock unit forms part of the image detector control unit. In another example, the shared clock unit forms part of the light source control unit. According to a further example, the shared clock unit is arranged external to both the image detector control unit and the light source control unit. In all of these examples, the operation of the image detector control unit may be precisely adjusted to the operation of the light source control unit and/or vice versa.

In an example, the control assembly further comprises an image detector communicatively connected to the image detector control unit. Additionally or alternatively, the control assembly further comprises a light source communicatively connected to the light source control unit. Thus, using the image detector, an image may be captured. Using the light source, a portion of the vehicle in which the control assembly is used may be illuminated. Based on the light source operation data, the image detector may be operated such that it captures images of consistently high quality. Additionally or alternatively, based on the image detector operation data, the light source may be operated such that it allows the image detector to capture images of consistently high quality. The images may be specifically captured while the light source is in the deactivation interval or while the light source is in the activation interval. Thus, the light source does not influence the captured images in a negative and undesired way. When using such a control assembly, the image detector and the light source may be physically located close to one another without disturbing the operation of one another.

In an example, the image detector comprises a rearview camera. Additionally or alternatively, the light source is configured to illuminate a license plate. In this example, the rearview camera may be the rearview parking camera. Consequently, the rearview camera may be physically located in close proximity to the light source. At the same time, an operation of the rearview camera is not disturbed by the light source.

According to a second aspect of the present disclosure, there is provided an image detector control unit for a control assembly according to the present disclosure. The image detector control unit comprises
- a memory unit, wherein light source operation data is stored on the memory unit, or
- a communication interface configured to receive light source operation data.

As has been mentioned before, schedules comprising at least one activation interval during which the light source is activated and at least one deactivation interval in which the light sources deactivated are frequently used when operating or controlling light sources. A prominent example is the control of light sources having at least one LED using a PWM signal. As far as the image detector control unit and the control of an image detector is concerned, the image detector may be controlled such that it only captures an image in accordance with a defined capturing frequency. This means that the image detector captures images in a periodic, non-continuous manner. Using the memory unit or the communication interface, light source operation data indicative of the at least one deactivation interval and/or the at least one activation interval is rendered available to the image detector control unit. Consequently, the capturing of the images, more generally speaking the control of the image detector, may be time coordinated with the operation of the light source. Based thereon, the image detector may be controlled such that it only captures images during a deactivation interval in which the light source is deactivated. Thus, a negative influence of the light source on the image detector is excluded and the performance of the image detector in dark environment is enhanced. Alternatively the image detector may be controlled such that is specifically captures images only during an activation interval in which the light source is activated. In this case, image quality is enhanced since the light source illuminates the space or area of which an image is captured. In other words, the image detector may be controlled such that it specifically captures images only during a deactivation interval, if the light source is arranged such that it negatively influences the image detector or risks to negatively influence the image detector. In another example, the image detector may be controlled such that it specifically captures images only during an activation interval, if the light source is arranged such that it may illuminate an area or space from which an image is to be captured.

It is noted that the schedule may comprise a plurality of activation intervals and deactivation intervals occurring in an alternating manner.

In an example, the light source operation data is indicative of one or more of a switching frequency between the activation interval and the deactivation interval, an activation interval duration, an activation interval start time or an activation interval end time, a deactivation interval duration, a deactivation interval start time or a deactivation interval end time, a duty cycle or a pulse-width modulation signal.

According to an example, the image detector control unit is configured to cause an image detector assembly to capture an image during the at least one deactivation interval.

In an example, the image detector control unit is configured to cause the image detector assembly to capture an image during a subset of deactivation intervals.

In an example, the image detector control unit is configured to synchronize the operation of the image detector to the schedule.

According to an example, the image detector control unit is configured to adjust at least one image detector setting to at least one environmental condition associated with the deactivation interval or the activation interval. In other words, the image detector is configured to capture high-quality images thereby respecting at least one environmental condition. In an example, a sensitivity of the image detector is set. As has been mentioned before, the image detector captures images only during the deactivation interval or only during the activation interval. If the image detector captures images only during the deactivation interval, the sensitivity may be set to be comparatively high such that high-quality images may be captured in dark environments. If the image detector captures images only during the activation interval, the sensitivity may be set to be comparatively low such that high-quality images may be captured in a situation in which the area or space from which the image is to be captured is illuminated by the light source. Altogether, high-quality images may be captured using the image detector.

According to a third aspect, there is provided a light source control unit for a control assembly according to the present disclosure, wherein the light source control unit comprises
- a memory unit, wherein image detector operation data is stored on the memory unit, or
- a communication interface configured to receive image detector operation data.

As has been mentioned before, the image detector operation data is indicative of at least one point in time at which an image is captured. In a case in which images are regularly captured, the image detector operation data may comprise a capturing frequency information. Using the memory unit or the communication interface, image detector operation data is rendered available to the light source control unit. Consequently, the illumination provided by the light source, more generally speaking the control of the light source, may be time coordinated with the operation of the image detector. In other words, the light source may be specifically controlled to be in a deactivation interval while an image is captured or to be in an activation interval while an image is captured. Thus, a negative influence of the light source on the image detector is excluded and a quality of the images captured by the image detector is enhanced. In other words, the light source may be controlled such that it is in the deactivation interval, if the light source is arranged such that it negatively influences the image detector or risks to negatively influence the image detector. In another example, the light source may be controlled such that it is in an activation interval, if the light source is arranged such that it may illuminate an area or space from which an image is to be captured.

It is noted that the schedule according to which the light source is operated may comprise a plurality of activation intervals and deactivation intervals occurring in an alternating manner.

In an example, the light source control unit is configured to synchronize the operation of the light source to the operation of the image detector.

According to a fourth aspect, there is provided a method for operating an image detector assembly locatable in proximity to a light source assembly. The light source assembly is operated in accordance with a schedule, wherein the schedule comprises at least one activation interval during which the light source assembly is activated and at least one deactivation interval in which the light source assembly is deactivated. The method comprises:
- determining or receiving light source operation data indicative of the at least one deactivation interval and/or the at least one activation interval, and
- causing the image detector assembly to capture an image during the at least one deactivation interval or during the at least one activation interval.

As has been mentioned before, schedules comprising at least one activation interval during which the light source is activated and at least one deactivation interval in which the light sources deactivated are frequently used when operating or controlling light sources. A prominent example is the control of light sources having at least one LED using a PWM signal. As far as the image detector control unit and the control of an image detector is concerned, the image detector may be controlled such that it only captures an image in accordance with a defined capturing frequency. This means that the image detector captures images in a periodic, non-continuous manner. Using light source operation data indicative of the at least one deactivation interval and/or the at least one activation interval, the image detector assembly may be caused to operate in coordination with the operation of the light source. Based thereon, the image detector may be controlled such that it only captures images during a deactivation interval in which the light source is deactivated. Thus, a negative influence of the light source on the image detector is excluded and a performance of the image detector in dark environment is enhanced. Alternatively, the image detector may be controlled such that it only captures images during an activation interval in which the light source is activated. In other words, an image is captured and the light source is used for illumination. Altogether, the image detector may be operated such that it captures images of consistently high quality.

In the present disclosure, the image detector assembly comprises the image detector and the corresponding image detector control unit.

In the present disclosure, the light source assembly comprises the light source and the corresponding light source control unit.

In an example, the schedule comprises a plurality of activation intervals and deactivation intervals occurring in an alternating manner. In other words, the activation intervals and the deactivation intervals occur in an intermittent and/or periodic manner. This allows to thoroughly illuminate objects e.g. on the vehicle using the light source. At the same time, a negative influence of the light source on the image detector is excluded and the image detector may be operated such that it captures images of consistently high quality

In an example, causing the image detector assembly to capture an image during the at least one deactivation interval or the at least one activation interval comprises synchronizing the operation of the image detector to the schedule. This means that the image detector is operated in a time coordinated manner with respect to the schedule according to which the light sources operated.

In an example, the light source operation data is indicative of one or more of
- a switching frequency between the activation interval and the deactivation interval,
- an activation interval duration,
- an activation interval start time or an activation interval end time,
- a deactivation interval duration,
- a deactivation interval start time or a deactivation interval end time,
- a duty cycle, or
- a pulse-width modulation signal.

All of these parameters are indicative of the at least one deactivation interval and/or the at least one activation interval. Thus, all of these parameters allow the image detector control unit to be operated in a time coordinated manner with respect to the schedule according to which the light sources operated.

In an example, the method further comprises adjusting at least one image detector setting to at least one environmental condition associated with the deactivation interval or the activation interval. In other words, the image detector is configured to capture high-quality images thereby respecting at least one environmental condition. In an example, a sensitivity of the image detector is set. As has been mentioned before, the image detector captures images only during the deactivation interval or only during the activation interval. Thus, high-quality images may be captured using the image detector.

In an example, causing the image detector assembly to capture an image during the deactivation interval comprises causing the image detector assembly to capture an image during a subset of deactivation intervals or during a subset of activation intervals. In other words, the image detector does not capture an image at every deactivation interval or every activation interval. This renders the operation of the image detector assembly efficient.

The method for operating an image detector assembly may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

The present disclosure is additionally directed to a data processing apparatus comprising means for carrying out the method for operating an image detector assembly of the present disclosure.

Furthermore, the present disclosure relates to a computer program comprising instructions which, when the program is executed by a computer, cause the computer to carry out the method for operating an image detector assembly of the present disclosure.

Additionally, the present disclosure is directed to a computer-readable storage medium comprising instructions which, when executed by a computer, cause the computer to carry out the method for operating an image detector assembly of the present disclosure.

According to a fifth aspect, there is provided a method for operating a light source assembly locatable in proximity to an image detector assembly, the image detector assembly configured to capture an image in at least one point in time, the method comprising:
- determining or receiving image detector operation data indicative of the at least one point in time, and
- causing the light source assembly to emit light at the at least one point in time or outside the at least one point in time.

Thus, the light source may be controlled such that it specifically provides illumination while the image detector captures an image or such that it specifically is deactivated while the image detector captures an image. In this context, the image detector may capture images in a periodic, non-continuous manner. The light source may be caused to operate in coordination with the operation of the image detector. Thus, a negative influence of the light source on the image detector is excluded and a performance of the image detector is enhanced. Altogether, the image detector may be operated such that it captures images of consistently high quality.

In an example, causing the light source assembly to emit light at the at least one point in time or outside the at least one point in time comprises synchronizing the operation of the light source to the operation of the image detector. This means that the light source and the image detector are operated in a time coordinated manner.

In an example, the image detector assembly is configured to capture an image in a plurality of points in time, the plurality of points in time forming a regular pattern. This means that a time span between adjacent points in time at which an image is captured is constant. Thus, the operation of the image detector may be characterized by a capturing frequency. This allows the image detector to capture images which may be perceived as moving images by the human eye.

According to an example, causing the image light source assembly to emit light comprises causing the light source assembly to emit light during a subset of points in time or outside a subset of points in time. In other words, the light source is not operated at every point in time the image detector captures an image. This renders the operation of the light source efficient.

The method for operating a light source assembly may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

The present disclosure is additionally directed to a data processing apparatus comprising means for carrying out the method for operating a light source assembly of the present disclosure.

Furthermore, the present disclosure relates to a computer program comprising instructions which, when the program is executed by a computer, cause the computer to carry out the method for operating a light source assembly of the present disclosure.

Additionally, the present disclosure is directed to a computer-readable storage medium comprising instructions which, when executed by a computer, cause the computer to carry out the method for operating a light source assembly of the present disclosure.

According to a sixth aspect, there is provided a use of light source operation data indicative of at least one deactivation interval and/or at least one activation interval of an operation schedule of a light source for operating an image detector. As has been mentioned before, schedules comprising at least one activation interval during which the light source is activated and at least one deactivation interval in which the light sources deactivated are frequently used when operating or controlling light sources. A prominent example is the control of light sources having at least one LED using a PWM signal. As far as the image detector control unit and the control of an image detector is concerned, the image detector may be controlled such that it only captures an image in accordance with a defined capturing frequency. This means that the image detector captures images in a periodic, non-continuous manner. Using light source operation data indicative of the at least one deactivation interval and/or the at least one activation interval, the image detector assembly may be caused to operate in coordination with the operation of the light source. Based thereon, the image detector may be controlled such that it only captures images during a deactivation interval in which the light source is deactivated. Thus, a negative influence of the light source on the image detector is excluded. Based on the light source operation data, the image detector may be operated such that it captures images of consistently high quality.

According to a seventh aspect, there is provided a use of image detector operation data indicative of at least one point in time at which the image detector captures an image for operating a light source. Using image detector operation data, the light source may be caused to operate in coordination with the operation of the image detector. Based thereon, the light source may be controlled such that it only provides illumination while an image is captured or such that it specifically does not provide illumination while an image is captured. Thus, an undesired negative influence of the light source on the image detector is excluded and the image detector may be operated such that it captures images of consistently high quality.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows an back of a vehicle comprising a light source configured for illuminating a license plate, a rearview camera and a control assembly according to the present disclosure with an image detector control unit according to the present disclosure, wherein an image detector assembly comprising the image detector control unit may be operated using a method according to the present disclosure,
- Figure 2: shows a pulse width modulation signal for operating the light source of Figure 1,
- Figure 3: shows the control assembly of Figure 1 in accordance with a first example, and
- Figure 4: shows the control assembly of Figure 1 in accordance with a second example.

### DETAILED DESCRIPTION

The Figures are merely schematic representations and serve only to illustrate examples of the disclosure. Identical or equivalent elements are in principle provided with the same reference signs.

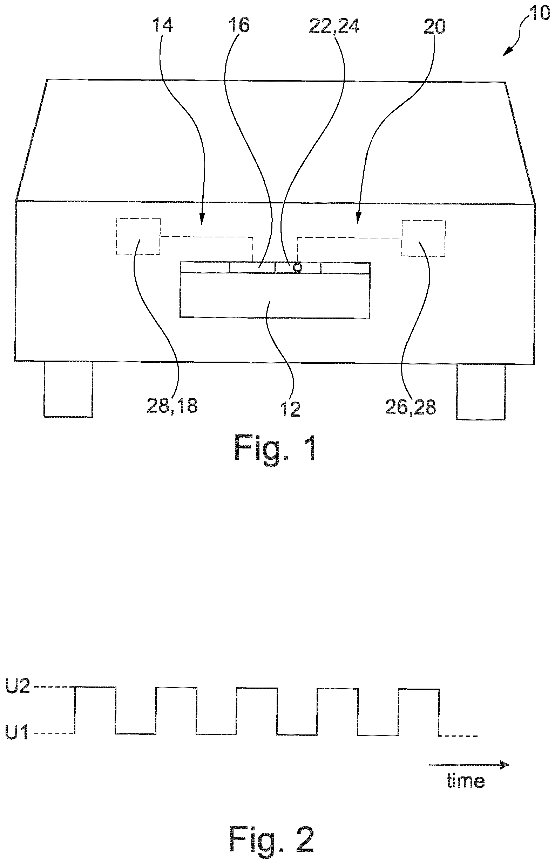

Figure 1 shows a back of a vehicle 10.

A license plate 12 is mounted on the back of the vehicle 10.

Moreover, the vehicle 10 comprises a light source assembly 14. The light source assembly 14 comprises a light source 16 and a light source control unit 18. The light source 16 and the light source control unit 18 are communicatively connected.

The light source 16 is configured to illuminate the license plate 12. To this end, the light source 16 comprises a light-emitting diode (LED).

The light source 16, more precisely the LED, is controlled using the light source control unit 18. To this end, the light source control unit 18 provides a pulse width modulation (PWM) signal to the light source 16. An example of a pulse width modulation signal is shown in Figure 2. Such a signal comprises a sequence of essentially two different voltage levels U1, U2, wherein the lower voltage level U1 corresponds to 0 V and the higher voltage level U2 corresponds to a positive voltage above 0 V. Based on the PWM signal, the light source 16, more precisely the LED, is alternatingly switched on and off, wherein the light source 16 is off if the PWM signal is at 0 V and on if the PWM signal is at the higher voltage level U2.

In this context, the frequency of switching on and off the light source 16 is chosen such that it may not be resolved by a human eye. This means that the light emitted by the light source 16 appears to be static for the human eye.

In more general words, the light source control unit 18 is configured to control the light source 16 such that the light source 16 may be operated in accordance with a schedule, the schedule comprising a plurality of activation intervals during which the light source is activated and a plurality of deactivation intervals in which the light source is deactivated. The deactivation intervals are associated with the portions of the PWM signal at U1, i.e. 0 V, and the activation intervals are associated with the portions of the PWM signal at the higher voltage U2.

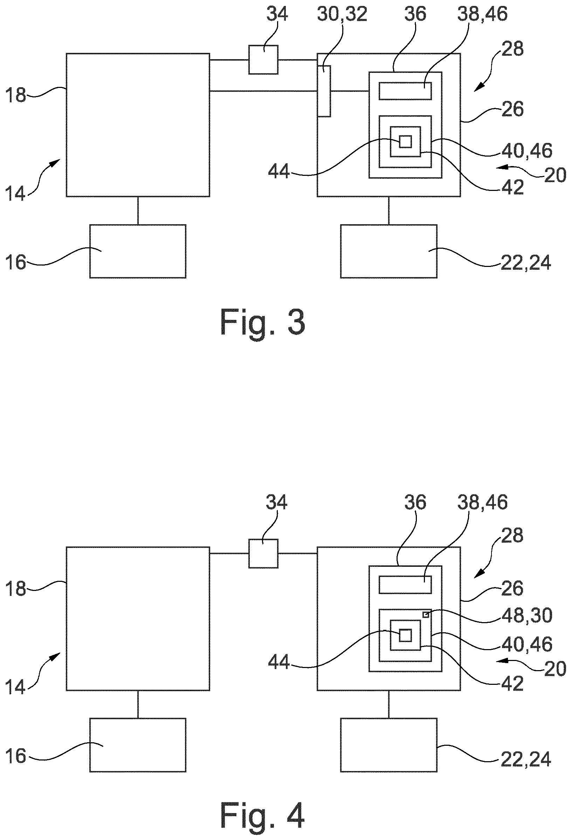

It is noted that the light source control unit 18 is only represented schematically in Figure 1 and will be explained in further detail in connection with Figures 3 and 4.

Moreover, the vehicle 10 comprises an image detector assembly 20. The image detector assembly 20 comprises an image detector 22 being formed as a rearview camera 24 in the present example. Additionally, the image detector assembly 20 comprises an image detector control unit 26.

The image detector 22 and the image detector control unit 26 are communicatively connected and the image detector control unit 26 is configured to control the image detector 22. This means that the image detector control unit 26 may cause the image detector 22 to capture an image. It is noted that in the present example, the image detector 22 does not capture images continuously but captures images periodically with a predefined time span between the captured images. In other words, the image detector 22 is caused to capture images in accordance with a predefined capturing frequency. The capturing frequency is chosen such that the images captured by the image detector 22 cannot be resolved by the human eye. This means that the human eye perceives a continuously moving image instead of separate single images.

It is noted that the image detector control unit 26 is only represented schematically in Figure 1 and will be explained in further detail in connection with Figures 3 and 4.

The image detector control unit 26 and the light source control unit 18 both form part of a control assembly 28.

A control assembly 28 according to a first example is shown in Figure 3.

The control assembly 28 additionally comprises a data providing means 30 configured to provide light source operation data indicative of at least one deactivation interval and/or at least one activation interval to the image detector control unit 26.

In the present example, the data providing means 30 is formed by a communication interface 32 of the image detector control unit 26. The communication interface 32 is configured to provide the light source operation data to the image detector control unit 26.

This means that the image detector control unit 26 receives light source operation data via the communication interface 32.

Moreover, the control assembly 28 comprises a clock unit 34. The clock unit 34 is communicatively connected to the image detector control unit 26 and to the light source control unit 18.

In the example of Figure 3, the clock unit 34 is represented as an element separate from the light source control unit 18 and also separate from the image detector control unit 26. However, it is of course possible that the clock unit 34 is integrated into one of the light source control unit 18 or the image detector control unit 26.

The image detector control unit 26 comprises a data processing apparatus 36 with a data processing unit 38 and a data storage unit 40.

The data storage unit 40 comprises a computer-readable storage medium 42.

On the computer-readable storage medium 42, there is provided a computer program 44.

The computer program 44 and, thus, also the computer-readable storage medium 42 comprise instructions which, when executed by the data processing unit 38 or, more generally speaking, a computer cause the data processing unit 38 or the computer to carry out a method for operating the image detector assembly 20.

Consequently, the data processing unit 38 and the data storage unit 40 form means 46 for carrying out the method for operating the image detector assembly 20.

As has been mentioned before, the light source assembly 14 is operated in accordance with the schedule comprising a plurality of activation intervals and deactivation intervals occurring in an alternating manner.

A first step of the method comprises receiving light source operation data indicative of at least one deactivation interval and/or at least one activation interval.

In the present example, the light source operation data is indicative of an activation interval start time for each of the activation intervals and a deactivation interval start time for each of the deactivation intervals.

In other words, the light source operation data indicates when the light source 16 is deactivated and when the light source 16 is activated.

In a second step of the method, the image detector assembly 20, more precisely the image detector 22, is caused to capture an image during a subset of deactivation intervals, e.g. every second deactivation interval.

Thus, the image detector 22 captures images only when the light source 16 is deactivated.

In other words, the method comprises synchronizing the operation of the image detector 22 to the schedule according to which the light source 16 is operated.

In an optional third step, at least one image detector setting is adjusted to at least one environmental condition during the deactivation interval. In the present example, a sensitivity of the image detector 22 is adapted to a brightness of the environment.

Figure 4 shows another example of the control assembly 28. In the following, only the differences with respect to the control assembly 28 of Figure 3 will be explained. Beyond that, reference is made to the above explanations.

The control assembly 28 of Figure 4 differs from the control assembly of Figure 3 in that the communication interface 32 is eliminated and instead the data storage unit 40 of the data processing apparatus comprises a memory unit 48.

In the example of Figure 4, the memory unit 48 forms the data providing means 30.

Thus, the light source operation data as indicated above is stored on the memory unit 48.

The remaining portions and components of the image detector control unit 26, especially the data processing unit 38, can access the memory unit 48 and the data stored thereon.

Based on the data stored on the memory unit 48, the image detector assembly 20 may be operated in the same manner as has been explained in connection with Figure 3.

It is noted that in all of the above-mentioned examples, light source operation data indicative of at least one deactivation interval and/or at least one activation interval of an operation schedule of a light source is used for operating an image detector.

It is understood that in other examples, image detector operation data indicative of at least one point in time at which the image detector captures an image is used for operating the light source. This means that instead of providing light source operation data for the image detector assembly, image detector operation data is provided for the light source. The effects are the same as explained above.

Moreover, even though in the above-mentioned examples, images are only captured while the light source is deactivated, it is understood that it is also possible to capture images only while the light source is activated. This allows to specifically illuminate the space or area from which an image is captured.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: license plate
- 14: light source assembly
- 16: light source
- 18: light source control unit
- 20: image detector assembly
- 22: image detector
- 24: rearview camera
- 26: image detector control unit
- 28: control assembly
- 30: data providing means
- 32: communication interface
- 34: clock unit
- 36: data processing apparatus of the image detector control unit
- 38: data processing unit
- 40: data storage unit
- 42: computer-readable storage medium
- 44: computer program
- 46: means for carrying out a method for operating an image detector assembly
- 48: memory unit

- U1: voltage level
- U2: voltage level

## Claims

1. A control assembly (28) for a vehicle (10), comprising
- an image detector control unit (26) configured to control an image detector (22) such that the image detector (22) captures an image in at least one point in time,
- a light source control unit (18) configured to control a light source (16) such that the light source (16) may be operated in accordance with a schedule, the schedule comprising at least one activation interval during which the light source (16) is activated and at least one deactivation interval in which the light source (16) is deactivated, and
- a data providing means (30) configured to provide light source operation data indicative of the at least one deactivation interval and/or the at least one activation interval to the image detector control unit (26) and/or configured to provide image detector operation data indicative of the at least one point in time to the light source control unit (18).

2. The control assembly (28) of claim 1, wherein the data providing means (30) comprises a memory unit (48), wherein the light source operation data is stored on the memory unit (48) and/or wherein the image detector operation data is stored on the memory unit (48).

3. The control assembly (28) of claim 1 or 2, wherein the data providing means (30) comprises a communication interface (32) configured to provide the light source operation data to the image detector control unit (26) and/or configured to provide the image detector operation data to the light source control unit (18).

4. The control assembly (28) of any of the preceding claims, further comprising a clock unit (34), wherein the clock unit (34) is communicatively connected to the image detector control unit (26) and to the light source control unit (18).

5. The control assembly (28) of any of the preceding claims, further comprising an image detector (22) communicatively connected to the image detector control unit (26) and/or further comprising a light source (16) communicatively connected to the light source control unit (18).

6. The control assembly (28) of claim 5, wherein the image detector (22) comprises a rearview camera (24) and/or wherein the light source (16) is configured to illuminate a license plate (12).

7. An image detector control unit (26) for a control assembly (28) according to any one of the preceding claims, wherein the image detector control unit (26) comprises
- a memory unit (48), wherein light source operation data is stored on the memory unit (48), or
- a communication interface (32) configured to receive light source operation data.

8. A light source control unit (18) for a control assembly (28) according to any of claims 1 to 6, wherein the light source control unit (18) comprises
- a memory unit (48), wherein image detector operation data is stored on the memory unit (48), or
- a communication interface (32) configured to receive image detector operation data.

9. A method for operating an image detector assembly (20) locatable in proximity to a light source assembly (14), the light source assembly (14) operated in accordance with a schedule, the schedule comprising at least one activation interval during which the light source assembly is activated and at least one deactivation interval in which the light source assembly is deactivated, the method comprising:
- determining or receiving light source operation data indicative of the at least one deactivation interval and/or the at least one activation interval, and
- causing the image detector assembly (20) to capture an image during the at least one deactivation interval or during the at least one activation interval.

10. The method of claim 9, wherein the schedule comprises a plurality of activation intervals and deactivation intervals occurring in an alternating manner.

11. The method of claim 10, wherein causing the image detector assembly (20) to capture an image during the deactivation interval comprises causing the image detector assembly (20) to capture an image during a subset of deactivation intervals or during a subset of activation intervals.

12. The method of any of claims 9 to 11, further comprising adjusting at least one image detector setting to at least one environmental condition associated with the deactivation interval or the activation interval.

13. A method for operating a light source assembly (14) locatable in proximity to an image detector assembly (14), the image detector assembly (20) configured to capture an image in at least one point in time, the method comprising:
- determining or receiving image detector operation data indicative of the at least one point in time, and
- causing the light source assembly (14) to emit light at the at least one point in time or outside the at least one point in time.

14. The method of claim 13, wherein the image detector assembly (20) is configured to capture an image in a plurality of points in time, the plurality of points in time forming a regular pattern.

15. The method of claim 14, wherein causing the image light source assembly (14) to emit light comprises causing the light source assembly (14) to emit light during a subset of points in time or outside a subset of points in time.

16. A use of light source operation data indicative of at least one deactivation interval and/or at least one activation interval of an operation schedule of a light source for operating an image detector (22).

17. A use of image detector operation data indicative of at least one point in time at which the image detector captures an image for operating a light source (22).

## Amended claims

### Amended claims in accordance with Rule 137(2) EPC.

1. A control assembly (28) for a vehicle (10), comprising
- an image detector control unit (26) configured to control an image detector (22) such that the image detector (22) captures an image in at least one point in time,
- a light source control unit (18) configured to control a light source (16) such that the light source (16) may be operated in accordance with a schedule, the schedule comprising at least one activation interval during which the light source (16) is activated and at least one deactivation interval in which the light source (16) is deactivated, and
- a data providing means (30) configured to provide light source operation data indicative of the at least one deactivation interval to the image detector control unit (26) and/or configured to provide image detector operation data indicative of the at least one point in time to the light source control unit (18) such that the image detector may be controlled to only capture an image during the deactivation interval in which the light source is deactivated.

2. The control assembly (28) of claim 1, wherein the data providing means (30) comprises a memory unit (48), wherein the light source operation data is stored on the memory unit (48) and/or wherein the image detector operation data is stored on the memory unit (48).

3. The control assembly (28) of claim 1 or 2, wherein the data providing means (30) comprises a communication interface (32) configured to provide the light source operation data to the image detector control unit (26) and/or configured to provide the image detector operation data to the light source control unit (18).

4. The control assembly (28) of any of the preceding claims, further comprising a clock unit (34), wherein the clock unit (34) is communicatively connected to the image detector control unit (26) and to the light source control unit (18).

5. The control assembly (28) of any of the preceding claims, further comprising an image detector (22) communicatively connected to the image detector control unit (26) and/or further comprising a light source (16) communicatively connected to the light source control unit (18).

6. The control assembly (28) of claim 5, wherein the image detector (22) comprises a rearview camera (24) and/or wherein the light source (16) is configured to illuminate a license plate (12).

7. A method for operating an image detector assembly (20) locatable in proximity to a light source assembly (14), the light source assembly (14) operated in accordance with a schedule, the schedule comprising at least one activation interval during which the light source assembly is activated and at least one deactivation interval in which the light source assembly is deactivated, the method comprising:
- determining or receiving light source operation data indicative of the at least one deactivation interval, and
- causing the image detector assembly (20) to capture an image during the at least one deactivation interval.

8. The method of claim 7, wherein the schedule comprises a plurality of activation intervals and deactivation intervals occurring in an alternating manner.

9. The method of claim 8, wherein causing the image detector assembly (20) to capture an image during the deactivation interval comprises causing the image detector assembly (20) to capture an image during a subset of deactivation intervals or during a subset of activation intervals.

10. The method of any of claims 7 to 9, further comprising adjusting at least one image detector setting to at least one environmental condition associated with the deactivation interval or the activation interval.

11. A method for operating a light source assembly (14) locatable in proximity to an image detector assembly (14), the image detector assembly (20) configured to capture an image in at least one point in time, the method comprising:
- determining or receiving image detector operation data indicative of the at least one point in time, and
- causing the light source assembly (14) to emit light outside the at least one point in time.

12. The method of claim 11, wherein the image detector assembly (20) is configured to capture an image in a plurality of points in time, the plurality of points in time forming a regular pattern.

13. The method of claim 12, wherein causing the image light source assembly (14) to emit light comprises causing the light source assembly (14) to emit light during a subset of points in time or outside a subset of points in time.

14. A use of light source operation data indicative of at least one deactivation interval of an operation schedule of a light source for operating an image detector (22) such that the image detector (22) may be controlled to only capture an image during the deactivation interval in which the light source is deactivated.

15. A use of image detector operation data indicative of at least one point in time at which the image detector captures an image for operating a light source (22) such that the image detector (22) may be controlled to only capture an image during the deactivation interval in which the light source is deactivated.
